# DEMANDE DE BREVET EUROPEEN

(11) **EP 0 930 486 A1**
(43) Date de publication de la demande: **21.07.1999**
(21) Numéro de dépôt: 99400122.0
(22) Date de dépôt: 20.01.1999
(51) Int. Cl.: G01J 5/00, G01J 5/60

(54) **Capteur de mesure d'une temperature et/ou d'une concentration**

(30) Priorité: 20.01.1998 FR 9800543; 04.08.1998 FR 9809996
(71) Demandeur: Auxitrol SA, 18000 Bourges (FR)
(72) Inventeur: Vally, Johana, 92310 Sèvres (FR); Collet, Eric, 18230 Saint Doulchard (FR); Legras, Olivier, 18000 Bourges (FR); Herve, Philippe, 75016 Paris (FR); Peronnet, Frédéric, 18000 Bourges (FR); Bernard, Marc, 18400 Saint florent sur cher (FR)
(74) Mandataire: Schrimpf, Robert

(57) **Abrégé**

Capteur pour la mesure d'une température et/ou la concentration d'un gaz ou d'un radical libre gazeux, comportant des moyens formant photodétecteurs (7) ainsi que des moyens de calcul (5) qui déterminent au moins une température et/ou une concentration en fonction des mesures réalisées par lesdits photodétecteurs (7), caractérisé en ce que lesdits moyens photodétecteurs sont juxtaposés à l'intérieur d'un boîtier dans lequel sont également disposés des moyens fixes (6) pour disperser sur lesdits photodétecteurs (7), en fonction de la longueur d'onde, un rayonnement que lesdits moyens reçoivent, les moyens photodétecteurs réalisant des mesures simultanées sur ce rayonnement, le boîtier comportant également une tête optique (2) permettant d'acheminer un rayonnement émis par ledit gaz ou ledit radical sur lesdits moyens de dispersion (6), la combinaison des moyens de dispersion (6) et des photodétecteurs (7) permettant une résolution en longueur d'onde inférieure à 0,1%, le nombre de photodétecteurs étant au moins égal à trois.

## Description

La présente invention est relative aux capteurs pour la mesure de la température et/ou de la concentration d'un gaz ou d'un radical libre gazeux.

Notamment, l'invention trouve avantageusement application dans le domaine de l'aéronautique ou de l'automobile, comme capteur embarqué pour la mesure de la température et/ou de la concentration, notamment de gaz de combustion dans le domaine des turbines à gaz terrestre, pour la mesure de la température et/ou de la concentration de chambres de combustion.

La pyrométrie classique met en oeuvre deux principes de mesure de température. Le premier principe joue sur l'effet convectif qui vient chauffer un élément sensible de type thermocouple ou sonde à résistance. Cet élément est protégé dans une enveloppe généralement métallique très sensible à la corrosion à hautes températures. Sa durée de vie est très limitée dans une flamme. Le second principe consiste à mesurer le rayonnement de type corps noir émis par une surface. Le rayonnement évolue suivant la fonction de Planck et dépend de l'émissivité du matériau comprise entre 0 et 1. Cette méthode ne mesure que la température de surface d'un objet. Ces techniques ne permettent pas la mesure directe et fiable de la température des gaz chaud d'une flamme.

Un but de l'invention est de proposer un système qui ne présente pas ces inconvénients.

On sait que la réponse spectrale d'un gaz ou d'un radical libre gazeux est fonction de la température et de la concentration de celui-ci.

Mais, pour des raisons de coûts et de complexité de mise en oeuvre, il n'est pas envisageable d'utiliser les spectromètres que l'on trouve classiquement dans le commerce comme capteur de température ou de concentration d'un gaz.

Il est déjà connu, notamment par DE 43 06 645 (US 5 551 780), de mesurer la température d'une flamme de combustion au moyen de deux photodétecteurs observant le rayonnement de la flamme selon deux directions de visée et sur une large bande de longueur d'onde.

Toutefois, la technique décrite dans DE 43 06 645 est d'une mise en oeuvre difficile puisqu'elle suppose de disposer deux photodétecteurs en deux coins de la chambre de combustion.

En outre, cette technique est destinée à permettre une mesure de température sur des gaz de combustion d'une chaudière à charbon, mais ne permet pas de recueillir des mesures de température ou de déterminer des profils de flamme avec une aussi grande précision que ce qui est souhaité par exemple dans le domaine de l'aéronautique.

On connaît également par JP 60 129 524 un dispositif pour le contrôle de la température d'une flamme selon lequel on mesure au moyen de capteurs optiques l'intensité du spectre qui est rayonné par une surface qui est en regard desdits capteurs et qui est chauffée par la flamme.

Ce dispositif ne met aucunement en oeuvre une détermination du spectre d'émission du gaz de combustion et ne permet pas une mesure d'une grande précision.

L'invention propose quant à elle un capteur pour la mesure d'une température et/ou la concentration d'un gaz ou d'un radical libre gazeux, comportant des moyens formant photodétecteurs ainsi que des moyens de calcul qui déterminent au moins une température et/ou une concentration en fonction des mesures réalisées par lesdits photodétecteurs, caractérisé en ce que lesdits moyens photodétecteurs sont juxtaposés à l'intérieur d'un boîtier dans lequel sont également disposés des moyens fixes pour disperser sur lesdits photodétecteurs, en fonction de la longueur d'onde, un rayonnement que lesdits moyens reçoivent, les moyens photodétecteurs réalisant des mesures simultanées sur ce rayonnement, le boîtier comportant également une tête optique permettant d'acheminer un rayonnement émis par ledit gaz ou ledit radical sur lesdits moyens de dispersion, la combinaison des moyens de dispersion et des photodétecteurs permettant une résolution en longueur d'onde inférieure à 0,1%, le nombre de photodétecteurs étant au moins égal à trois.

Un tel capteur constitue un système complètement passif contrairement aux techniques de mesure type RAMAN qui excite les gaz par un laser. Ce système est donc non intrusif.

Il est d'une grande simplicité et d'un faible coût, tout en étant d'une grande fiabilité, puisqu'il détecte et analyse le rayonnement d'un gaz dans une bande spectrale donnée en utilisant des moyens statiques sans aucune pièce en mouvement.

Il constitue un ensemble compact qui est facile à intégrer notamment sur une turbine ou une chambre de combustion.

La combinaison des moyens de dispersion et des photodétecteurs permettant une résolution en longueur d'onde inférieure à 0,1 %, permet à chaque détecteur d'avoir accès à une information spectrale très fine, par exemple autour d'une longueur d'onde de transition de rotation-vibration de la molécule du gaz de combustion, où le spectre du gaz est, sur une petite plage de longueur d'onde, très sensible aux variations de température.

Par exemple, pour une mesure sur du CO2, les mesures réalisées par les photodétecteurs sont entre 2380 et 2400 cm⁻¹.

En outre, le fait de disposer de trois capteurs ou plus permet de disposer de « courbes » de spectre auxquelles il est par exemple possible de comparer des courbes théoriques mémorisées par les moyens de calcul. On comprend qu'une comparaison entre courbes permet de disposer de beaucoup plus d'informations que dans le cas où un ou deux photodétecteurs mesurent l'intensité d'un spectre.

Ainsi, par la très bonne modélisation de la région spectrale sur laquelle le capteur permet une analyse, et par le calcul du bilan radiatif, le capteur peut retrouver pratiquement en temps réel (temps de calcul inférieur à 5s) des profils de température sur environ 50 couches de gaz, en comparant le spectre mesuré au spectre calculé.

Un tel capteur permet des mesures sur de très larges plages de pressions et de températures. Il est ainsi possible de réaliser des mesures sur des gaz chauds (350°C) d'échappement à pression atmosphérique jusqu'à des flammes de combustion correspondant à des températures au delà de 1600°C et à des pressions de 20 bars.

De préférence, les moyens pour disperser le rayonnement sur les photodétecteurs comportent un réseau de diffraction.

Avantageusement, le réseau de diffraction est conformé avec une forme générale concave, ce qui évite l'adjonction de miroirs concaves de collimation dans le cas d'un réseau de diffraction plan.

Par l'utilisation de fibres optiques passantes dans la bande spectrale analysée, la mesure peut éventuellement être déportée jusqu'à plusieurs dizaines de mètres.

D'autres caractéristiques et avantages de l'invention ressortiront encore de la description qui suit.

Cette description est purement illustrative et non limitative. Elle doit être tenue en regard des dessins annexés sur lesquels :
- la figure 1 est une représentation schématique illustrant le principe d'une mesure avec un capteur conforme à un mode de réalisation possible pour l'invention ;
- la figure 2 est une représentation schématique en vue en coupe des moyens formant spectromètre d'un capteur conforme à un mode de réalisation possible de l'invention ;
- les figures 3a et 3b sont des graphes sur lesquelles on a porté des réponses spectrales mesurées et simulées par un capteur conforme à un mode de réalisation de l'invention.

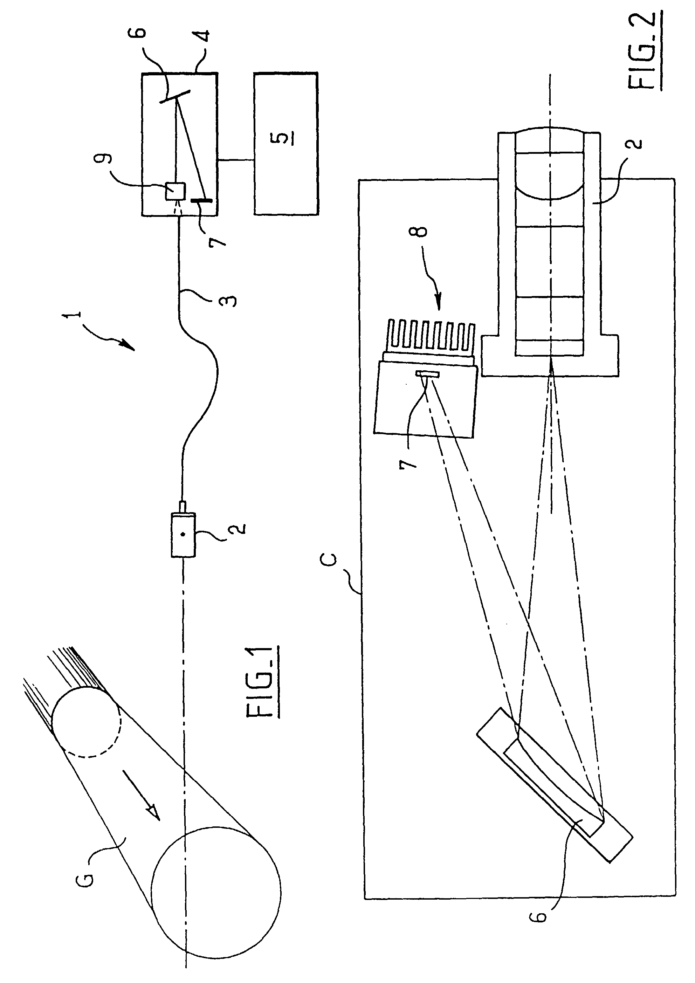

Le principe d'une mesure au moyen d'un capteur 1 conforme à un mode de réalisation possible de l'invention a été illustré sur la figure 1.

Dans cet exemple, le capteur 1 est constitué d'une tête optique 2 qui collecte le rayonnement infrarouge émis par des gaz chauds G circulant dans une veine, d'une fibre optique 3 infrarouge pour transmettre le signal optique à partir de la tête optique 2, de moyens 4 qui constituent un spectromètre statique ajusté sur le rayonnement thermique d'une espèce moléculaire présente dans les gaz chauds, ainsi que d'un processeur de calcul 5.

La tête optique 2 vise la zone où les gaz chauds émettent un rayonnement infrarouge sous l'effet de la température. Il s'agit en général d'une bande de rotation-vibration caractéristique de la molécule du gaz dont on veut mesurer la température. La majeure partie de ces bandes se situe dans une plage de longueur d'onde comprise entre le visible et 10 micromètres.

Cette tête optique 2 peut être constituée par des moyens de type télescope, ce qui permet d'obtenir une réponse spectrale indépendante de la longueur d'onde. Elle peut également être constituée par une lentille réalisée dans un matériau adapté aux longueurs d'onde souhaitées (saphir par exemple).

Dans l'un et l'autre cas, il est avantageusement prévu un jeu de diaphragmes qui élimine les lobes secondaires indésirables.

La fibre optique infrarouge 3 transmet le rayonnement collecté jusqu'à des longueurs d'ondes de 4 à 5 micromètres. Elle est insérée dans une structure métallique flexible pour la fixer et la protéger de la température et des vibrations. Sa longueur peut atteindre une dizaine de mètres en fonction des besoins.

Des variantes dans lesquelles le capteur n'utilise pas une telle fibre optique 3 sont bien entendu possibles. Dans ce cas, ainsi que l'illustre le montage de la figure 2, la tête optique 2 est directement montée sur les moyens 4 formant spectromètre.

Comme l'illustre également cette figure 2, les moyens 4 comportent un boîtier C dans lequel sont disposés une barrette de photodétecteurs 7 et des moyens 6 pour disperser la bande spectrale à analyser sur ladite barrette de photodétecteurs 7.

Une fente 10 est située sur la tête optique 2 à la focale du réseau concave et a une forme voisine de celle de la barrette de photodétecteurs.

Les moyens 6 sont par exemple constitués par un réseau de diffraction sur lequel est envoyé le rayonnement en sortie de la fibre optique 3, ce réseau de diffraction 6 réfléchissant ce rayonnement sur la barrette de photodétecteurs 7, en le dispersant en fonction de sa longueur d'onde.

A cet effet, le réseau de diffraction 6 est de préférence conformé avec une forme générale concave qui permet de concentrer l'énergie du rayonnement reçu sur lesdits photodétecteurs 7. Cette forme générale concave présente l'avantage d'éviter l'adjonction de deux miroirs de collimation dans le cas d'un réseau de diffraction plan. Sa focale est par exemple de 250 mm, son diamètre de 70 mm.

Les photodétecteurs 7 sont répartis par rapport au réseau de diffraction de façon à permettre chacun une mesure de l'intensité du rayonnement à une longueur d'onde différente λ. Chaque détecteur correspond à une bande spectrale δλ très fine. La résolution δλ/λ est égale ou inférieure à 0,1% et permet l'observation de chaque raie du spectre de rotation-vibration du gaz ou du radical libre. Préférentiellement, la résolution est égale ou inférieure à 0,05%..

La barrette de détecteurs 7 est refroidie par un ou plusieurs étages Peltier 8 pour atteindre sa température optimale de fonctionnement.

Egalement, il peut être prévu sur le trajet du rayonnement des moyens de modulation 9 (figure 1), par exemple de type statique à résonance piézo-électrique ou électromécanique ("chopper" selon la terminologie anglo-saxonne généralement utilisée), qui réalisent un hachage du rayonnement, de façon à permettre, avec un filtrage synchrone, la réjection du bruit engendré par les détecteurs. La fréquence de modulation peut atteindre 10 à 20 Khz.

Les signaux en sortie des photodétecteurs 7 sont envoyés sur des entrées analogiques/numériques du processeur 5. Ledit processeur 5 exécute un programme qui calcule, à partir d'un modèle thermodynamique dont il dispose en mémoire et d'un bilan radiatif du gaz, le comportement radiatif de plusieurs tranches de gaz successives dans l'axe de la tête optique 2. En faisant varier les paramètres thermodynamiques de chaque tranche, le système retrouve par comparaison entre le spectre calculé et le spectre mesuré au moyen des photodétecteurs 7 d'une part la concentration dans le gaz de la molécule qui correspond au spectre mesuré et d'autre part le profil de température du gaz.

Cette inversion est par exemple réalisée en mettant en oeuvre un traitement de convergence qui est par exemple de type "régression par gradient conjugué". Egalement, elle peut être réalisée par un traitement par réseau de neurones.

Pour permettre de prendre en compte la complexité de la réponse spectrale de la flamme, le nombre de photodétecteurs est au moins égal à 5.

On utilise par exemple une barrette de 16 ou 64 photodétecteurs 7 de type PbSe, le nombre de photodétecteurs pouvant être plus important (jusqu'à 100, voir plus).

Toutefois, pour des réponses spectrales de profil relativement simple, le nombre de photodétecteurs peut être restreint. L'expérience montre en effet qu'un nombre restreint de longueur d'onde suffit (3 ou 4 pour un profil rectangulaire) pour retrouver la température.

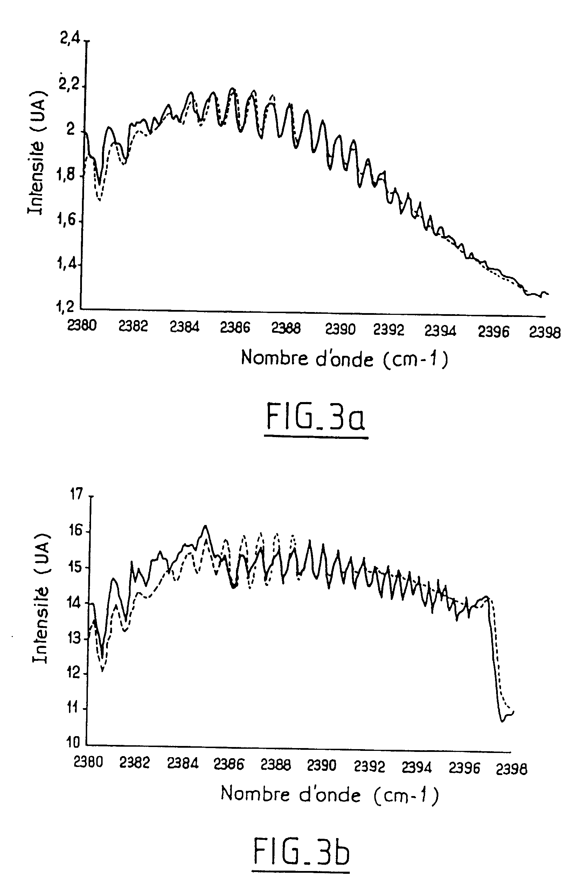

On a porté en fonction de la longueur d'onde sur les graphes des figures 3a et 3b :
- l'intensité du rayonnement du gaz mesurée par les photodétecteurs 7 (courbes en trait plein) ;
- l'intensité du rayonnement du gaz correspondant à une courbe de simulation déterminée par le microprocesseur 5 à partir du modèle thermodynamique (courbe en traits pointillés).

Pour l'un et l'autre des deux graphes, le mélange gazeux analysé comportait du CO₂ - comme c'est le cas généralement pour les gaz de combustion.

Dans le cas d'une analyse sur un gaz comportant du CO2, la plage de mesure est avantageusement centrée sur la transition de rotation-vibration de la molécule de CO₂ entre 2386 et 2397 cm⁻¹.

Le graphe de la figure 3a correspondait à une concentration en CO2 de 5,2%, à une pression totale de 2 bars. La température calculée par le microprocesseur 5 était de 778 K, alors qu'une mesure par un thermocouple donnait une valeur de 771 K.

Le graphe de la figure 3b correspondait à une concentration en CO2 de 10,5%, à une pression totale de 2 bars. La température calculée par le microprocesseur 5 était de 1221 K, tandis qu'une mesure par un thermocouple donnait une valeur de 1421 K.

Par conséquent, les températures mesurées au moyen du capteur proposé par l'invention sont très proches des mesures obtenues au moyen d'un capteur classique.

Comme on l'aura compris, l'invention a été ici décrite dans le cas où le gaz dont la température est déterminée est le CO₂, mais s'appliquerait de la même façon avec d'autres gaz de combustion et notamment avec le méthane dont l'intensité du spectre autour de 3000 cm⁻¹ est importante, ou encore avec l'eau (H₂O) .

## Revendications

1. Capteur pour la mesure d'une température et/ou la concentration d'un gaz ou d'un radical libre gazeux, comportant des moyens formant photodétecteurs (7) ainsi que des moyens de calcul (5) qui déterminent au moins une température et/ou une concentration en fonction des mesures réalisées par lesdits photodétecteurs (7), caractérisé en ce que lesdits moyens photodétecteurs sont juxtaposés à l'intérieur d'un boîtier dans lequel sont également disposés des moyens fixes (6) pour disperser sur lesdits photodétecteurs (7), en fonction de la longueur d'onde, un rayonnement que lesdits moyens reçoivent, les moyens photodétecteurs réalisant des mesures simultanées sur ce rayonnement, le boîtier comportant également une tête optique (2) permettant d'acheminer un rayonnement émis par ledit gaz ou ledit radical sur lesdits moyens de dispersion (6), la combinaison des moyens de dispersion (6) et des photodétecteurs (7) permettant une résolution en longueur d'onde inférieure à 0,1%, le nombre de photodétecteurs étant au moins égal à trois.

2. Capteur selon la revendication 1, caractérisé en ce que les moyens (6) pour disperser le rayonnement sur les photodétecteurs (7) comportent un réseau de diffraction.

3. Capteur selon la revendication 2, caractérisé en ce que le réseau de diffraction (6) est conformé avec une forme générale concave.

4. Capteur selon l'une des revendications précédentes, permettant une mesure sur du CO2, caractérisé en ce que les mesures réalisées par les photodétecteurs (7) sont entre 2380 et 2400 cm⁻¹.

5. Capteur selon l'une des revendications précédentes, caractérisé en ce qu'il comporte des moyens (3) de type fibre optique pour acheminer un rayonnement émis jusqu'à la tête optique.

6. Capteur selon l'une des revendications précédentes, caractérisé en ce qu'il comporte des moyens de modulation (9) disposés sur le trajet du rayonnement.

7. Capteur selon l'une des revendications précédentes, caractérisé en ce que la tête optique est de type télescope.

8. Capteur selon l'une des revendications 1 à 6, caractérisé en ce que la tête optique comporte une lentille en saphir.

9. Capteur selon l'une des revendications précédentes, caractérisé en ce que le nombre de photodétecteurs est au moins égale à 5.

10. Capteur selon l'une des revendications précédentes, caractérisé en ce que les moyens de calcul (5) déterminent un profil de température et/ou de concentration dans l'axe d'observation des moyens optiques.

11. Capteur selon la revendication 10, caractérisé en ce que les moyens de calcul (5) comportent des moyens mémoire dans lesquels un modèle thermodynamique du gaz est mémorisé et en ce qu'il comporte des moyens pour faire varier des paramètres thermodynamiques de différentes tranches de gaz dans l'axe d'observation et pour comparer les spectres ainsi calculés avec le spectre mesuré au moyen des photodétecteurs (7).

12. Capteur de température embarqué sur un aéronef ou un véhicule automobile, caractérisé en ce qu'il est constitué par un capteur selon l'une des revendications précédentes.

13. Capteur de température pour chambre de combustion de turbine à gaz terrestre.
